## Europäisches Patentamt
## European Patent Office
## Office européen des brevets

(19)

(11) Veröffentlichungsnummer: **0 175 252**
**B1**

(12) **EUROPÄISCHE PATENTSCHRIFT**

(45) Veröffentlichungstag der Patentschrift: 05.12.90

(21) Anmeldenummer: 85111362.1

(22) Anmeldetag: 09.09.85

(51) Int. Cl.⁵: **B 29 C 67/22,** B 29 B 7/74 //
B29K105:04

(54) Verfahren und Vorrichtung zum Herstellen eines fliessfähigen, zu Schaumstoff ausreagierenden Gemisches aus fliessfähigen, in Vorratsräumen gelagerten Komponenten.

(30) Priorität: 19.09.84 DE 3434441
24.11.84 DE 3442954

(43) Veröffentlichungstag der Anmeldung:
26.03.86 Patentblatt 86/13

(45) Bekanntmachung des Hinweises auf die
Patenterteilung:
05.12.90 Patentblatt 90/49

(84) Benannte Vertragsstaaten:
DE FR GB IT

(56) Entgegenhaltungen:
FR-A-2 224 280
US-A-4 157 427
US-A-4 312 820
US-A-4 376 172

PATENT ABSTRACTS OF JAPAN, Band 7, Nr.
215 (M-244)1360r, 22. September 1983; & JP-A-
58 108 116 (TOYOTA JIDOSHA KOGYO K.K.)
28-06-1983

(73) Patentinhaber: BAYER AG
D-5090 Leverkusen 1 Bayerwerk (DE)

(72) Erfinder: Krippl, Kurt
Niederstrasse 104
D-4019 Monheim (DE)
Erfinder: Sulzbach, Hans-Michael, Dipl.-Ing.
Hermann-Löns-Strasse 12
D-5330 Königswinter 51 (DE)
Erfinder: Schulte, Klaus, Dipl.-Ing.
Kurt-Schumacher-Ring 91b
D-5090 Leverkusen (DE)

Courier Press, Leamington Spa, England.

## Beschreibung

Die Erfindung betrifft ein Verfahren und die Verwendung einer Vorrichtung zum Herstellen eines fließfähigen, zu Schaumstoff ausreagierenden Gemisches aus fließfähigen, in Vorratsräumen gelagerten Komponenten, wobei vor dem dosierten Eintrag in eine Mischzone mindestens eine der Komponenten definiert mit Gas beladen wird, indem diese Komponente und Gas getrennt einem Begasungsraum mit Hohlrührer zugeführt werden und bei Gasbedarf das Gas mittels des Hohlrührers durch dessen Hohlwelle angesaugt, in die Komponente eingerührt und darin fein verteilt wird, bis der Sollwert erreicht ist.

Bei einer Vorrichtung dieser Art (EP-A3-0 110 244) wird die Begasung im Vorratsbehälter selbst oder in einem kleineren Zwischenbehälter durchgeführt. Dabei wird die Luft von der Hohlwelle innerhalb dieses Behälters direkt aus dem Gasraum angesaugt. Die Ansaugöffnung der Hohlwelle befindet sich also unterhalb des Deckels innerhalb des Gasraumes. Das Dichtemeßgerät schaltet das Rührwerk über ein Steuergerät an, um Gas einzurühren, wenn die untere Toleranzschwelle des Dichtesollwertes überschritten wird, und schaltet es bei Erreichen der oberen Toleranzschwelle wieder aus.

Nachteilig hierbei ist, daß sich das Rührwerk nicht mehr zum Homogenisieren der im Behälter befindlichen Komponente verwenden läßt, weil es zeitweise abgeschaltet ist bzw. werden muß.

Bei Komponenten mit Zusatzstoffen, welche zum Absetzen neigen, tritt dann eine Entmischung auf. Auch für eine gleichmäßige Temperierung ist eine dauernde Umwälzung wichtig.

Aufgabe ist es, die eingangs genannte Vorrichtung so zu verbessern, daß auch Komponenten mit zum Absetzen neigenden Zusatzstoffen und Komponenten, welche gleichmäßig temperiert werden müssen, zum Zwecke der Homogenisierung dauernd umgewälzt werden können.

Diese Aufgabe wird gemäß der Erfindung dadurch gelöst, daß die Komponente kontinuierlich im Kreislauf aus dem Vorratsraum durch den Begasungsraum und zurück in den Vorratsraum geführt wird, wobei das von dem Hohlrührerangesaugte Gas mindestens auf dem im Vorratsraumherrschenden Druck gehalten wird und der im Vorratsraum verbleibende Komponentenanteil auch während jener Zeiten, in denen keine Begasung stattfindet, homogenisiert wird.

Auf diese Weise sind der Begasungs- und Homogenisierungsvorgang entkoppelt worden. Das heißt, daß die Komponente im Vorratsbehälter, beispielsweise mittels eines Rührwerkes, dauernd umgewälzt werden kann, um Ablagerungserscheinungen zu vermeiden und den Behälterinhalt gleichmäßig temperiert zu halten, auch wenn zeitweise keine Begasung stattfindet.

Nach einer besonderen Durchführungsform des neuen Verfahrens wird das Gas aus dem Gasraum des Vorratsraumes angesaugt.

Vorratsräume für derartige Komponenten werden in der Regel unter einem Vordruck gehalten, und zwar meist in der Größenordnung von 2 bis 5 bar. Meist wird hierfür Druckluft aus einem Druckluftnetz über ein Druckregelventil zugeführt, so daß der Druck im Behälter konstant gehalten wird. Besonders vorteilhaft ist die Entnahme des Gases aus dem Gasraum, weil in der Komponente enthaltene flüchtige Substanzen aus der Komponente austreten können und sich in dem Gasraum ansammeln. Sie werden dann beim Begasungsprozeß wieder in die Komponente mit eingeführt.

Nach einer besonderen alternativen Ausführungsform wird das Gas einer externen Gasquelle entnommen und das Druckniveau im Begasungsraum dem Druckniveau des zugeführten Gases angeglichen.

Hierbei ist es möglich, die Begasung entweder unter dem gleichen Druck wie er im Vorratsbehälter herrscht oder unter einem höheren Druckniveau durchzuführen. Unter höherem Druckniveau läßt sich der Begasungsvorgang entsprechend schneller durchführen, d.h., pro Zeiteinheit wird von der Komponente mehr Gas aufgenommen.

Bei der Verwendung der neuen Vorrichtung zum Herstellen eines fließfähigen, zu Schaumstoff ausreagierenden Gemisches aus fließfähigen Komponenten besteht diese Vorrichtung aus Vorratsbehältern mit Gasraum und von diesen Vorratsbehältern über Dosierpumpen zu einem Mischkopf führenden Zuführungsleitungen, wobei eine Begasungseinrichtung dem Zuführsystem einer Komponente zugeordnet ist und einen Rührwerksbehälter mit Hohlrührer und ein mit dem Rührerantrieb über ein Impulsschaltgerät verbundenes Gasgehaltsmeßgerät aufweist, und der Hohlrührer eine Ansaugöffnung aufweist, wobei der Rührwerksbehälter in einer aus dem Vorratsbehälter abführenden und in ihn wieder einmündenden Kreislaufleitung angeordnet ist, in welcher eine Förderpumpe vorgesehen ist, und wobei der Ansaugöffnung des Hohlrührers eine Gaszuleitung zugeordnet ist.

Durch diesen Aufbau der Vorrichtung ist es möglich, das Rührwerk im Vorratsbehälter unabhängig vom Begasungsvorgang zu betreiben.

Nach einer besonderen Ausführungsform ist die Gaszuleitung mit dem Gasraum des Vorratsbehälters verbunden.

Auf diese Weise läßt sich ebenso vorteilhaft wie bei der Vorrichtung gemäß EP-A3-0 110 244 das Gas aus dem Gasraum des Voratsbehälters ansaugen.

Nach einer alternativen Ausführungsform ist die Gaszuleitung mit einer externen Gasquelle verbunden.

Hierbei ergeben sich zwei verschiedene Betriebsmöglichkeiten, nämlich: Zum ersten kann der Druck der externen Gasquelle auf den Vordruck im Vorratsbehälter eingestellt werden, und im zweiten Falle kann ein höherer Druck als im Vorratsbehälter vorgegeben werden.

Vorzugsweise ist der Gaszuführleitung ein Druckregler zugeordnet, der zu dem in den Vorratsbehälter führenden Abschnitt der Kreislaufleitung eine Verbindung aufweist.

Mittels dieses Druckreglers lassen sich Druckschwankungen im System ausgleichen.

Nach einer weiteren besonderen Ausführungsform sind die Gaszuleitung und der zwischen Rührwerksbehälter und Vorratsbehälter angeordnete Abschnitt der Kreislaufleitung über einen Druckausgleichskolben miteinander verbunden.

Diese Anordnung hat den Vorteil, daß sich der Druck im Rührwerksbehälter dem Druck des von einer externen Gasquelle zugeführten Gases selbsttätig anpaßt. Dabei kann der Druck im Rührwerksbehälter über dem Druckniveau im Vorratsbehälter gehalten werden, so daß eine schnellere Begasung stattfindet.

Als besonders vorteilhaft hat sich eine Ausführungsform erwiesen, gemäß welcher die Kreislaufleitung in Höhe des Rührsternes des Hohlrührers in den Rührwerksbehälter einmündet.

Durch diese Maßnahme wird die eingebrachte Luft sofort mit der neu zugeführten Komponente vermischt, so daß eine besonders schnelle und intensive Dispergierung erfolgt.

Insbesondere zum Begasen von füllstoffhaltigen Komponenten hat sich eine weitere besondere Ausführungsform als vorteilhaft erwiesen, gemäß welcher vom Boden des Rührwerksbehälters eine Spülleitung zum Vorratsbehälter zurückführt, wobei der Boden, welcher vorzugsweise konisch gestaltet ist, oberhalb des maximalen Füllniveaus des Vorratsbehälters angeordnet ist.

Da Füllstoffe, wie Glasfasern, oft zum Absetzen neigen, werden auf diese Weise Ablagerungen im Rührwerksbehälter verhindert. Die Spülleitung ist gegebenenfalls mit einem Absperrventil versehen, welches aber bei Verarbeitung von füllstoffhaltigen Komponenten vorzugsweise immer geöffnet ist. Sie mündet entweder direkt in den Vorratsbehälter oder indirekt durch Vereinigung mit dem zum Vorratsbehälter führenden Abschnitt der Kreislaufleitung in den Vorratsbehälter ein. Es vesteht sich, daß diese Spülleitung nur geringen Querschnitt besitzt, damit der weit überwiegende Anteil der begasten Komponente den Rührwerksbehälter über den rückführenden Abschnitt der Kreislaufleitung verläßt. Der konische Boden sorgt dafür, daß sich absetzende Teilchen schneller zur Ausmündung der Spülleitung bewegen.

In der Zeichnung ist die verwendete neue Vorrichtung anhand von zwei Ausführungsbeispielen rein schematisch dargestellt und nachstehend näher beschrieben. Es zeigen:

Fig. 1 eine Vorrichtung mit Zufuhr des Gases für die Begasung aus dem Gasraum des Vorratsbehälters,

Fig. 2 eine Vorrichtung mit einer externen Gasquelle und

Fig. 3 eine Abwandlung der Vorrichtung gemäß Fig. 2 im Ausschnitt.

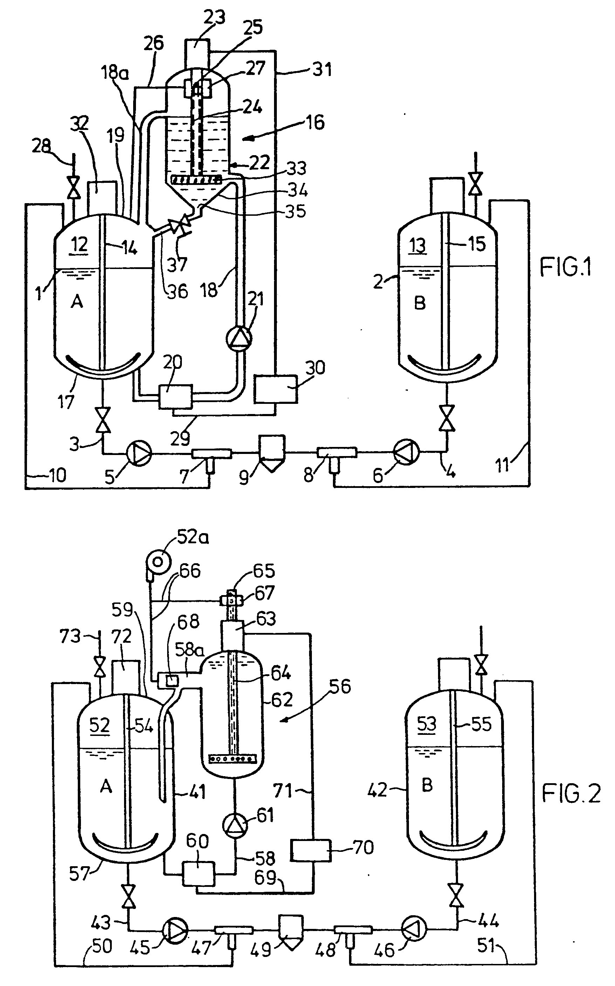

In Fig. 1 gelangen die Komponenten A und B aus Vorratsbehältern 1, 2 über Zuführungsleitungen 3, 4, Dosierpumpen 5, 6 und Umschaltventile 7, 8 zu einem Mischkopf 9. Zur Kreislaufführung der Komponenten zweigen von den Umschaltventilen 7, 8 in die Vorratsbehälter 1, 2 zurückführende Kreislaufleitungen 10, 11 ab. In den Vorratsbehältern 1, 2 sind Gasräume 12, 13 und Rührwerke 14, 15 angeordnet. Dem Vorratsbehälter 1 ist eine Begasungseinrichtung 16 zugeordnet. Sie besteht aus mehreren Elementen, und zwar: Vom Boden 17 des Vorratsbehälters 1 führt eine Kreislaufleitung 18 ab, welche wieder in den Kopf 19 des Vorratsbehälters 1 einmündet. In dieser Kreislaufleitung 18 sind hintereinander ein Gasgehaltsmeßgerät 20 (Dichtemeßgerät nach Druckschrift Nr. 6100 der Firma Josef Heinrichs Meßgeräte, D-5000 Köln 41), eine Förderpumpe 21 sowie ein kleiner Rührwerksbehälter 22 angeordnet. Sein Rührwerk besteht aus einem Antrieb 23 und einem mit einem Rührstern 33 ausgestatteten Hohlrührer 24, dessen Ansaugöffnung 25 über eine Gaszuleitung 26 mit dem Gasraum 12 des Vorratsbehälters 1 in Verbindung steht. Die Gaszuleitung 26 mündet dabei in ein den Hohlrührer 24 in Höhe der Ansaugöffnung 25 abdichtend umgebendes Ringkammergehäuse 27. Die Kreislaufleitung 18 mündet in Höhe des Rührsternes 33 seitlich in den Rührwerksbehälter 22. Am Vorratsbehälter 1 ist noch ein absperrbarer, mit einer nicht dargestellten Druckgasquelle verbundener Anschluß 28 vorgesehen. Zwischen dem Rührwerksbehälter 22 und dem Vorratsbehälter 1 erstreckt sich ein Abschnitt 18a der Kreislaufleitung 18. Das Gasgehaltsmeßgerät 20 ist über eine Impulsleitung 29 mit einem als Impulsschaltgerät ausgebildeten Sollwertvergleicher 30 verbunden, welcher den Antrieb 23 des Hohlrührers 24 über eine Impulsleitung 31 bei Bedarf ein- und ausschaltet. Der Antrieb 32 des Rührwerkes 14 des Vorratsbehälters 1 ist unabhängig davon antreibbar. Der Rührwerksbehälter 22 weist einen konischen Boden 34 auf, welcher in eine Ausmündung 35 ausläuft, von welcher eine Spülleitung 36 mit Absperrventil 37 in den Vorratsbehälter 1 zurückführt und oberhalb des maximalen Füllniveaus einmündet. Sie besitzt einen wesentlich geringeren Querschnitt als der Abschnitt 18a.

In Fig. 2 gelangen die Komponenten A und B aus Vorratsbehältern 41, 42 über Zuführungsleitungen 43, 44, Dosierpumpen 45, 46 und Umschaltventilen 47, 48 in einen Mischkopf 49. Zur Kreislaufführung der Komponenten zweigen von den Umschaltventilen 47, 48 in die Vorratsbehälter 41, 42 zurückführende Kreislaufleitungen 50, 51 ab. In den Vorratsbehältern 41, 42 sind Gasräume 52, 53 und Rührwerke 54, 55 angeordnet. Dem Vorratsbehälter 41 ist eine Begasungseinrichtung 56 zugeordnet. Sie besteht aus mehreren Elementen, und zwar: Vom Boden 57 des Vorratsbehälters 41 führt eine Kreislaufleitung 58 ab, welche wieder in den Kopf 59 des Vorratsbehälters 41 einmündet und bis in dessen unteren Bereich geführt ist. In dieser Kreislaufleitung 58 sind hintereinander ein Gasgehaltsmeßgerät 60, eine Förderpumpe 61 sowie ein kleiner Rührwerksbehälter 62 angeordnet. Sein Rührwerk besteht aus einem Antrieb 63 und einem Hohlrührer 64, dessen Ansaugöffnung 65 über eine Gaszuleitung 66 mit einer externen Gasquelle 52a (Druckluftnetz) in Verbindung steht. Gegebenenfalls muß ein nicht dargestelltes Druckreduzierventil bzw. Druckhalteventil vorgesehen sein. Die Gaszuleitung 66 mündet dabei in ein den Hohlrührer 64 in Höhe der Ansaugöffnung 65 abdichtend umgebendes Ringkammergehäuse 67. Zwischen dem sich vom Rührwerksbehälter 62 und dem Vorratsbehälter 41 erstreckenden Abschnitt 58a der Kreislaufleitung 58 sowie der Gaszuleitung 66 ist ein Druckausgleichskolben 68 angeordnet. Das Gasgehaltsmeßgerät 60 ist über eine Impulsleitung 69 mit einem als Impulsschaltgerät ausgebildeten Sollwertvergleicher 70 verbunden, welcher den Antrieb 63 des Hohlrührers 64 über eine Impulsleitung 71 bei Bedarf ein- und ausschaltet. Der Antrieb 72 des Rührwerkes 54 des Vorratsbehälters 41 ist davon unabhängig antreibbar. Der Vorratsbehälter 41 ist über eine absperrbare Zuleitung 73 an ein nicht dargestelltes Druckluftnetz angeschlossen.

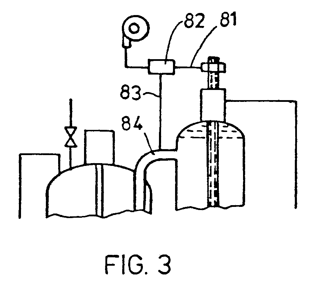

Die Vorrichtung gemäß Fig. 3 unterscheidet sich von derjenigen gemäß Fig. 2 dadurch, daß der Ausgleichskolben 68 entfällt. Dafür ist in der Gaszuleitung 81 ein Druckregler 82 angeordnet, welcher über eine Verbindung 83 den im Leitungsabschnitt 84 herrschenden Druck erfaßt und den Druck der zuzuführenden Luft entsprechend darauf einstellt. Ansonsten besteht Übereinstimmung mit der Ausführungsform gemäß Fig. 2.

### Verfahrensbeispiel 1

Verwendet wird die Vorrichtung gemäß Fig. 1. Im Vorratsbehälter 1 wird ein Vordruck von 4 bar aufrechterhalten. Um ein Absetzen von in der Komponente A enthaltenen Zusatzstoffen zu vermeiden, wird der Rührer 14 dauernd vom Rührwerk 32 angetrieben. Als Maß für die Gasbeladung wird die Dichte der Komponente herangezogen. Die Komponente wird über die Kreislaufleitung 18 von der Förderpumpe 21 dauernd umgewälzt. Dabei strömt in definiertem Verhältnis der größere Teil über den Leitungsabschnitt 18a zurück in den Vorratsbehälter 1 und der kleinere Teil über die Spülleitung 36, um Ablagerungen am Boden 34 des Rührwerksbehälters 16 zu vermeiden. Das Dichtemeßgerät 20 mißt kontinuierlich die Dichte der Komponente A unter dem vorgegebenen Druck von 4 bar und gibt den Meßwert über die Impulsleitung 29 an den Sollwertvergleicher 30. Übersteigt der gemessene Dichtewert den vorgegebenen Sollwert von 0,93 g/cm³, so setzt der Sollwertvergleicher über die Impulsleitung 31 den Rührwerksantrieb 23 in Betrieb, wodurch der Hohlrührer 24 Unterdruck erzeugt und über die Ansaugöffnung 25, das Ringkammergehäuse 27 und die Gaszuleitung 26 Gas aus dem Gasraum 12 des Vorratsbehälters 1 ansaugt. Während der Begasung sinkt die Dichte der Komponente wieder ab, und bei Erreichen des Sollwertes gibt der Sollwertvergleicher 30 einen Impuls zum Abschalten des Rührwerksantriebes 23. Es versteht sich, daß der Sollwert ein gewisses Toleranzspektrum aufweist und die Impulse an den Rührwerksantrieb 23 jeweils bei Erreichen des oberen oder unteren Schwellwertes weitergibt. Abgesehen von größeren Pausenzeiten laufen die Dosierpumpen 5, 6 kontinuierlich durch und dosieren die Komponenten A und B über die Umschaltventile 7 und 8 in den Mischkopf 9 oder fördern sie über die Rücklaufleitungen 10 und 11 zurück in die Behälter 1 und 2.

### Verfahrensbeispiel 2

Verwendet wird die Vorrichtung gemäß Fig. 2. Die in den Vorratsbehältern 41 und 42 unter einem Druck von 4 bar gelagerten Komponenten A und B werden von den Rührern 54 und 55 dauernd umgewälzt. Die in der Kreislaufleitung 58 angeordnete Förderpumpe 61 pumpt die Komponente A dauernd um. Dabei wird die Dichte der Komponente A mittels des Dichtemeßgerätes 60 dauernd gemessen. Der Meßwert wird über eine Impulsleitung 69 dem Sollwertvergleicher 70 zugespeist. Es ist ein Dichtesollwert von 0,93 g/cm³ vorgegeben. Beim Dichteanstieg wird bei Erreichen der oberen Toleranzschwelle des Sollwertes über die Impulsleitung 71 der Rührwerksantrieb 63 betätigt. Von der externen Gasquelle 52a wird Druckluft über die Gaszuleitung 66 zur Ansaugöffnung 65 des Hohlrührers 64 geleitet, welcher diese Luft ansaugt und in der Komponente fein verteilt. Die Druckluft steht unter einem Druck von 5 bar. Der Druckausgleichskolben 68 sorgt dafür, daß sich der Druck zwischen der zugeführten Druckluft und der aus dem Rührwerksbehälter 62 abströmenden Komponente ausgleicht, so daß im Rührwerksbehälter 62 ebenfalls ein Druck von 5 bar herrscht. Durch das höhere Druckniveau im Rührwerksbehälter 62 gegenüber dem Verfahrensbeispiel 1 erfolgt die Begasung in wesentlich kürzerer Zeit. Die Komponenten A und B werden über die Zuführungsleitungen 43 und 44 von den Dosierpumpen 45 und 46 über die Umschaltventile 47, 48 in den Mischkopf 49 gefördert oder sie gelangen bei entsprechender Stellung der Umschaltventile 47, 48 über die Rücklaufleitungen 50 und 51 zurück in die Vorratsbehälter 41 und 42.

### Patentansprüche

1. Verfahren zum Herstellen eines fließfähigen, zu Schaumstoff ausreagierenden Gemisches aus fließfähigen, in Vorratsräumen gelagerten Komponenten, wobei vor dem dosierten Eintrag in eine Mischzone mindestens eine der Komponenten definiert mit Gas beladen wird, indem diese Komponente und Gas getrennt einem Begasungsraum mit Hohlrührer zugeführt werden und bei Gasbedarf das Gas mittels des Hohlrührers durch dessen Hohlwelle angesaugt, in die Komponente eingerührt und darin fein verteilt wird, bis der Sollwert erreicht ist, dadurch gekennzeichnet, daß die Komponente kontinuierlich im Kreislauf aus dem Vorratsraum durch den Begasungsraum und zurück in den Vorratsraum geführt wird, wobei das von dem Hohlrührer angesaugte Gas mindestens auf dem im Vorratsraum herrschenden Druck gehalten wird und der im Vorratsraum verbleibende Komponentenanteil auch während jener Zeiten, in denen keine Begasung stattfindet, homogenisiert wird.

2. Verfahren nach Anspruch 1, dadurch gekennzeichnet, daß das Gas aus dem Gasraum des Vorratsraumes angesaugt wird.

3. Verfahren nach Anspruch 1 dadurch gekennzeichnet, daß das Gas einer externen Gasquelle entnommen und das Druckniveau im Begasungsraum dem Druckniveau des zugeführten Gases angeglichen wird.

4. Verwendung einer Vorrichtung zur Durchführung des Verfahrens nach Anspruch 1 zum Herstellen eines fließfähigen, zu Schaumstoff ausreagierenden Gemisches aus fließfähigen Komponenten, wobei die Vorrichtung aus Vorratsbehältern (1, 2; 41, 42) mit Gasraum (12, 13; 52, 53) und von diesen Vorratsbehältern (1, 2; 41, 42) über Dosierpumpen (5, 6; 45, 46) zu einem Mischkopf (9; 49) führenden Zuführungsleitungen (3, 4; 43, 44) besteht, wobei die Begasungseinrichtung (16; 56) dem Zuführsystem (1, 3, 5, 7; 41, 43, 45, 47) einer Komponente zugeordnet ist und einen Rührwerksbehälter (22; 62) mit Hohlrührer (24; 64) und ein mit dem Rührerantrieb (23; 63) über ein Impulsschaltgerät (30; 70) verbundenes Gasgehaltsmeßgerät (20; 60) aufweist, und der Hohlrührer (24; 64) eine Ansaugöffnung (25; 65) aufweist, wobei der Rührwerksbehälter (22; 62) in einer aus dem Vorratsbehälter (1; 41) abführenden und in ihn wieder einmündenden Kreislaufleitung (18, 18a; 58, 58a; 84) angeordnet ist, in welcher eine Förderpumpe (21; 61) vorgesehen ist, und wobei der Ansaugöffnung (25; 65) des Hohlrührers (24; 64) eine Gaszuleitung (26; 66; 81) zugeordnet ist.

5. Verwendung nach Anspruch 4, dadurch gekennzeichnet, daß die Gaszuleitung (26) mit dem Gasraum (12) des Vorratsbehälters (1) verbunden ist.

6. Verwendung nach Anspruch 4, dadurch gekennzeichnet, daß die Gaszuleitung (66; 81) mit einer externen Gasquelle (52a) verbunden ist.

7. Verwendung nach Anspruch 6, dadurch gekennzeichnet, daß der Gaszuleitung (81) ein Druckregler (82) zugeordnet ist, der zu dem in den Vorratsbehälter führenden Abschnitt (84) der Kreislaufleitung eine Verbindung (83) aufweist.

8. Verwendung nach Anspruch 6, dadurch gekennzeichnet, daß die Gaszuleitung (66) und der zwischen Rührwerksbehälter (62) und Vorratsbehälter (41) angeordnete Abschnitt (58a) der Kreislaufleitung (58) über einen Druckausgleichskolben (68) miteinander verbunden sind.

9. Verwendung nach einem der Ansprüche 4 bis 8, dadurch gekennzeichnet, daß die Kreislaufleitung (18) in Höhe des Rührsternes (33) des Hohlrührers (24) in den Rührwerksbehälter (22) mündet.

10. Verwendung nach einem der Ansprüche 4 bis 9, dadurch gekennzeichnet, daß vom Boden (34) des Rührwerksbehälters (22) eine Spülleitung (36) zum Vorratsbehälter (1) zurückführt, wobei der Boden (34) oberhalb des maximalen Füllniveaus des Vorratsbehälters (1) angeordnet ist.

## Revendications

1. Procédé de production d'un mélange fluide, réagissant en formant une mousse, de composants fluides stockés dans des réservoirs, l'un au moins des composants étant chargé de gaz dans des conditions définies avant l'introduction dosée dans une zone de mélange, de façon telle que ce composant et le gaz sont amenés séparément dans une chambre d'injection de gaz équipée d'un agitateur creux, et lorsqu'un besoin de gaz se fait sentir, le gaz est aspiré au moyen de l'agitateur dans son arbre creux, il s'incorpore dans le composant par agitation et il y est finement dispersé jusqu'à ce que la valeur de consigne ait été atteinte, caractérisé en ce que le composant circule continuellement depuis le réservoir en passant par la chambre d'injection de gaz avec retour au réservoir, le gaz aspiré par l'agitateur creux étant maintenu au moins à la pression qui règne dans le réservoir et la fraction de composant restant dans ce dernier étant homogénéisée même pendant les périodes au cours desquelles il n'y a pas d'injection de gaz.

2. Procédé suivant la revendication 1, caractérisé en ce que le gaz est aspiré dans l'espace libre contenant du gaz du réservoir.

3. Procédé suivant la revendication 1, caractérisé en ce que le gaz provient d'une source externe de gaz et le niveau de pression dans l'espace d'injection de gaz est identifié au niveau de pression du gaz amené.

4. Utilisation d'un dispositif pour la mise en oeuvre du procédé suivant la revendication 1, pour la production d'un mélange fluide de composants fluides réagissant en formant une mousse, le dispositif étant constitué de réservoirs (1, 2; 41, 42) présentant un espace rempli de gaz (12, 13; 52, 53) et de conduites d'amenée (3, 4; 43, 44) menant de ces réservoirs (1, 2; 41, 42) à une tête mélangeuse (9; 49) au moyen de pompes doseuses (5, 6; 45, 46), le dispositif d'injection de gaz (16; 56) étant associé au système d'amenée (1, 3, 5, 7; 41, 43, 45, 47) d'un composant et présentant un récipient d'agitation (22; 62) équipé d'un agitateur creux (22; 64) et un appareil de mesure (20; 60) de la teneur en gaz relié à la commande d'agitateur (23; 63) par un appareil commutateur (30; 70) à impulsions, et l'agitateur creux (24; 64) présente une ouverture d'aspiration (25; 65), le récipient d'agitation (22; 62) étant disposé dans une conduite de circuit (18, 18a; 58, 58a; 84) partant du réservoir (1; 41) et débouchant en retour dans ce réservoir, et dans laquelle est prévue une pompe de transfert (21; 61), une conduite d'amenée de gaz (26; 66; 81) étant associée à l'orifice d'aspiration (25; 65) de l'agitateur creux (24; 64).

5. Utilisation suivant la revendication 4, caractérisée en ce que la conduite (26) d'amenée de gaz communique avec l'espace (12) rempli de gaz du réservoir (1).

6. Utilisation suivant la revendication 4, caractérisée en ce que la conduite (66; 81) d'amenée de gaz communique avec une source de gaz (52a) externe.

7. Utilisation suivant la revendication 6, caractérisée en ce qu'un régulateur de pression (182) est associé à la conduite (81) d'amenée de gaz et présente une jonction (83) avec le tronçon (84), menant au réservoir, de la conduite de circuit.

8. Utilisation suivant la revendication 6, caractérisée en ce que la conduite (66) d'amenée de gaz et le tronçon (58a) de la conduite de circuit (58) disposé entre le récipient d'agitation (62) et le réservoir (41) communiquent l'un avec l'autre par un piston (68) de compensation de pression.

9. Utilisation suivant l'une des revendications 4 à 8, caractérisée en ce que la conduite de circuit (18) débouche dans le récipient d'agitation (22) à la hauteur de l'étoile d'agitation (33) de l'agitateur (24).

10. Utilisation suivant l'une des revendications 4 à 9, caractérisée en ce qu'une conduite de lavage (36) retourne au réservoir (1) depuis le fond (34) du récipient d'agitation (22), le fond (34) étant disposé au-dessus du niveau maximal de remplissage du réservoir (1).

**Claims**

1. A process for the production of a free-flowing foam-forming reaction mixture of free-flowing components stored in storage compartments, at least one of the components being subjected — before metered introduction into a mixing zone — to clearly defined charging with gas by the component in question and gas being fed separately to a mechanical blowing compartment comprising a hollow stirrer and the gas, when required, being taken in by means of the hollow stirrer through the hollow shaft thereof, stirred into the component and finely dispersed therein until the set value is reached, characterized in that the component is circulated continuously from the storage compartment through the mechanical blowing compartment and back into the storage compartment, the gas taken in by the hollow stirrer being kept at least at the pressure prevailing in the storage compartment and the quantity of component remaining in the storage compartment being homogenized even during those periods when no mechanical blowing takes place.

2. A process as claimed in claim 1, characterized in that the gas is taken in from the gas space of the storage compartment.

3. A process as claimed in claim 1, characterized in that the gas is taken from an external gas source and the pressure level in the mechanical blowing compartment is brought to the pressure level of the gas introduced.

4. The use of an apparatus for carrying out the process claimed in claim 1 for the production of a free-flowing foam-forming reaction mixture of free-flowing components, the apparatus consisting of storage tanks (1, 2; 41, 42) with a gas compartment (12, 13; 52, 53) and of feed pipes (3, 4; 43, 44) leading from the storage tanks (1, 2; 41, 42) via metering pumps (5, 6; 45, 46) to a mixing head (9; 49), the mechanical blowing unit (16; 56) being associated with the feed system (1, 3, 5, 7; 41, 43, 45, 47) of a component and comprising a stirred tank (22; 62) with a hollow stirrer (24; 64) and a gas content meter (20; 60) connected to the stirrer drive (23; 63) by a pulse switching device (30; 70) and the hollow stirrer (24; 64) comprising an intake opening (25; 65), the stirred tank (22; 62) being arranged in a circulation pipe (18, 18a; 58, 58a; 84) which leads away from and back into the storage tank (1; 41) and in which a feed pump (21; 61) is arranged and a gas feed pipe (26; 66; 81) being associated with the intake opening (25; 65) of the hollow stirrer (24; 64).

5. The use claimed in claim 4, characterized in that the gas feed pipe (26) is connected to the gas compartment (12) of the storage tank (1).

6. The use claimed in claim 4, characterized in that the gas feed pipe (66; 81) is connected to an external gas source (52a).

7. The use claimed in claim 6, characterized in that a pressure governor (82) with a connection (83) to that section (84) of the circulation pipe which leads into the storage compartment is associated with the gas feed pipe (81).

8. The use claimed in claim 6, characterized in that the gas feed pipe (66) and that section (58a) of the circulation pipe (58) which is arranged between the stirred tank (62) and the storage tank (41) are interconnected by a pressure-equalizing piston (68).

9. The use claimed in any of claims 4 to 8, characterized in that the circulation pipe (18) opens into the stirred tank (22) level with the star (33) of the hollow stirrer (24).

10. The use claimed in any of claims 4 to 9, characterized in that a purging pipe (36) leads back from the base (34) of the stirred tank (22) to the storage tank (1), the base (34) being arranged above the maximum filling level of the storage tank (1).

FIG.1

FIG.2

1

FIG. 3